# EUROPEAN PATENT APPLICATION

(11) **EP 4 280 241 A1**
(43) Date of publication of application: **22.11.2023**
(21) Application number: 21918122.9
(22) Date of filing: 15.12.2021
(51) Int. Cl.: H01G 9/00, H01G 9/004, H01G 9/26, H01G 2/08, H01G 9/145

(54) **ALUMINUM ELECTROLYTIC CAPACITOR INTEGRATED MODULE**

(30) Priority: 15.01.2021 CN 202110052679; 15.01.2021 CN 202110059122; 15.01.2021 CN 202110059121; 10.02.2021 CN 202110186402; 19.02.2021 CN 202110195101; 19.02.2021 CN 202110195103
(71) Applicant: Zhou, Wanglong, Bao'an Shenzhen, Guangdong 518125 (CN)
(72) Inventor: Zhou, Wanglong, Bao'an Shenzhen, Guangdong 518125 (CN)
(74) Representative: Gulde & Partner
(86) International application number: PCT/CN2021/138356
(87) International publication number: WO 2022/151899

(57) **Abstract**

An aluminum electrolytic capacitor integrated module. A modular aluminum electrolytic capacitor integrated with discrete aluminum electrolytic capacitor units conducts heat outwards in a centralized and insulated manner by means of an insulating heat-conducting gasket, and therefore, a heat dissipator can be used for efficient cooling. Seals of the discrete aluminum electrolytic capacitor are sealed twice, such that the service life of the modular capacitor breaks through the service life upper limit of 15 years of a traditional discrete aluminum electrolytic capacitor. A temperature sensor is additionally mounted, such that a user monitors, in real time, the internal temperature rise and the service life of the modular capacitor. A Y capacitor module is additionally mounted, such that the problem of reverse pulse current formation performed by a capacitor electrolyte on negative electrode foil caused by high-order harmonics on a power direct-current bus is solved. Moreover, common-mode interference is effectively suppressed, thereby improving the EMC reliability of the machine system; and the modular aluminum electrolytic capacitor integrated with the above technology is applied to a power electronic apparatus, and has technical advantages in many aspects such as heat dissipation, low temperature rise, long service life and EMI noise suppression.

## Description

### Background of the Present Invention

### Field of Invention

The invention relates to a new structure form of packaged aluminum electrolytic capacitor, that is, an aluminum electrolytic capacitor module. Specifically, the discrete aluminum electrolytic capacitor is integrated and modularized, and a radiator is used to dissipate heat. A temperature sensor is used to monitor the internal temperature rise of the capacitor module. Optimize the EMC performance of the power supply device, etc., so that it can improve the performance and reliability in the application of power electronic devices such as switching power supply, inverter or frequency converter.

### Description of Related Arts

Power electronic devices such as switching power supplies, inverters or frequency converters rely on the switching of IGBT/MOSFET semiconductor devices to adjust the output voltage and frequency, and can provide the required power supply voltage according to the actual needs of the load to achieve the purpose of energy saving and control. To balance and suppress busbar voltage fluctuations, it is necessary to use large-capacity aluminum electrolytic capacitors to filter and stabilize the voltage.

Generally, aluminum electrolytic capacitors are packaged in discrete structures, including products with lead wires, solder tabs, bolts and other lead-out methods. Users need to combine series and parallel to combine various performance parameters to adapt to indicators such as voltage, ripple current, correction frequency, and temperature coefficient, to form a capacitor bank used in industrial equipment and various electronic products.

The working life of aluminum electrolytic capacitors is determined by the temperature of the central hot spot. The higher the hot spot temperature, the shorter the life. Generally, every time the hot spot temperature drops by 5-10°C, the working life of aluminum electrolytic capacitors will be doubled.

Generally, manufacturers of aluminum electrolytic capacitors use K-type or J-type thermocouples to test the internal working temperature, and users of aluminum electrolytic capacitors use surface-mounted NTC or PTC thermistors to test the working temperature, and use the detection of temperature rise to predict the working life of capacitors And high temperature protection monitoring.

In the case of discrete aluminum electrolytic capacitors, it is too complicated and costly to monitor the temperature of all aluminum electrolytic capacitors. Therefore, only a certain aluminum electrolytic capacitor located close to the central hot spot in the capacitor bank can be selected for sampling monitoring.

Sampling monitoring sometimes has a large error between the temperature data results and the actual aluminum electrolytic capacitors, especially when the sampled monitored aluminum electrolytic capacitors have quality failures, the data results cannot reflect the real working temperature rise of the aluminum electrolytic capacitors at all.

The service life of aluminum electrolytic capacitors will be greatly affected by the conditions of use. Environmental conditions include temperature, humidity, air pressure, vibration, etc., and electrical conditions include voltage, ripple current, charge and discharge, etc. In power bus filter applications, temperature And the heat generated by the ripple current is an important factor determining the working life of the capacitor. It is mainly affected by the outward evaporation of the electrolyte through the sealing part, which is manifested by the decrease of the electrostatic capacity and the increase of the loss tangent value.

Due to the evaporation of the electrolyte and the aging of the rubber material of the capacitor seal, the estimated upper limit of the working life of the aluminum electrolytic capacitor is usually 15 years.

The heat sink of the power supply unit used by the capacitor mainly provides heat dissipation for the IGBT/MOSFET power semiconductor device, and other passive components, including aluminum electrolytic capacitors, use the "direct ventilation" method of the fan to dissipate heat.

However, in special application environments, such as outdoor string photovoltaic inverters with high protection levels above IP65, charging pile module power supplies, etc., because the protective shell needs to be sealed inside and outside the dustproof and waterproof, which limits the air circulation, passive components cannot continue to operate. The "direct ventilation" method is used for cooling and heat dissipation; especially as the power density of power supply equipment continues to increase, the aluminum electrolytic capacitors used in the main circuit bus filter have increasingly strict heat dissipation requirements. However, due to the large power loss of IGBT/MOSFET devices and high working heat dissipation temperature, The heat sink of the power supply configuration cannot dissipate heat for power semiconductors and capacitors at the same time. Therefore, the heat dissipation of aluminum electrolytic capacitors outside the airtight enclosure with a protection level above IP65 has become a problem that engineers need to solve.

Because power electronic devices generally adopt pulse modulation technology (PWM), high-order harmonics will be superimposed on the output end, and these high-order harmonics will generate differential-mode interference at the output end. Propagated on the positive and negative poles of the DC busbar and the AC cable; at the moment when the IGBT/MOSFET tube is turned on or off, a high Du/Dt will be generated, and it will pass through the switching device in the circuit, the metal lead, the heat sink, the shell, etc. to the ground The parasitic capacitance of the capacitor is continuously charged and discharged to generate a common-mode current, and the above-mentioned differential-mode current and common-mode current will generate radiation interference; the high-order harmonics existing on the power DC bus cannot be effectively and smoothly absorbed or filtered by the aluminum electrolytic capacitor itself. It will cause the electrolyte inside the aluminum electrolytic capacitor to perform reverse pulse current formation on the negative electrode foil, and then generate a large amount of gas and heat to cause the capacitor to age and fail prematurely.

At the same time, the power wires in the power electronic device generate strong radiation, forming an efficient radiation antenna; when the power electronic system is working, the loop formed by the differential mode current will form a loop antenna, which radiates electromagnetic interference outward; power electronic devices generally use metal shells Conduct electromagnetic shielding. When there is a gap in the shielding shell, a slot antenna will be formed to radiate electromagnetic interference; a large amount of radiation noise interference signals will not only affect the radio equipment around the power electronic device, but also affect the power electronic device through conduction or radiation. The working reliability of the electronic control unit, especially the electronic control unit with high electromagnetic sensitivity in the high-voltage and high-power power electronic device system, the electromagnetic compatibility EMC problem caused by it is particularly prominent. Usually, safety capacitors are used to prevent electric shock and protect people. For safety, the X capacitor is used to suppress the differential mode interference of the circuit, and the Y capacitor is used to suppress the common mode interference of the circuit.

Integrating discrete aluminum electrolytic capacitors into an independent whole aluminum electrolytic capacitor module can optimize the electrical performance, such as patent 202011082745.9 or 202011082897.9, the integrated module products of small aluminum electrolytic capacitors have excellent electrical properties such as ripple current capability and high frequency characteristics. has been greatly improved.

Since the aluminum shell on the surface of the aluminum electrolytic capacitor has a negative voltage, it is necessary to properly handle the insulation between the single aluminum electrolytic capacitor and the metal heat-conducting base member in the integration of the aluminum electrolytic capacitor module, and the aluminum electrolytic capacitor has a special pressure release failure mode, so The aluminum electrolytic capacitor module also needs to be equipped with an internal pressure release protection mechanism.

Usually discrete aluminum electrolytic capacitors are insulated by PVC or PET insulating sleeves outside the aluminum shell. Thermally conductive silicone materials can be used for insulation between discrete aluminum electrolytic capacitors and metal heat-conducting base components inside the aluminum electrolytic capacitor module. To improve insulation reliability, it is necessary to use as thick as possible. In order to improve the heat dissipation performance of the capacitor module, it is necessary to reduce the thermal resistance between the internal discrete aluminum electrolytic capacitor monomer and the metal heat-conducting base member, and to reduce the thickness of the heat-conducting silica gel material; to improve the reliability of the capacitor module Doing a proper balance between optimizing the electrical performance and optimizing the electrical performance will undoubtedly increase the technical difficulty; in order to optimize the electrical performance of the aluminum electrolytic capacitor module, the use of more expensive high thermal conductivity thermal conductivity potting silica gel will increase the cost of the capacitor module.

In the process of manufacturing aluminum electrolytic capacitor module products, it is necessary to weld the positive and negative leads or solder tab terminals of all discrete aluminum electrolytic capacitors to the positive conductive copper bar and negative conductive copper bar of the bus bar. Insulation needs to be done to ensure safety. Due to the close distance between the positive and negative electrodes of the small aluminum electrolytic capacitor, the positive and negative conductive copper bars of the busbar also need to be as close as possible to reduce the inductance, so there is a high manufacturing process difficulty; the actual site The scrap rate in the manufacturing process is high, and there is a greater risk of electric shock to the test workers; and the product has a high failure rate in use, etc., so it is necessary to adopt a new product design to avoid the above problems and improve the quality.

Due to the limitations of the above special conditions, the internal integration structure of the aluminum electrolytic capacitor module is complicated, the manufacturing process is difficult, and the risk of technical failure is high.

### Summary of the Present Invention

The invention provides a design scheme of a centralized insulating aluminum electrolytic capacitor module, which has a simple structure and manufacturing process; through the overall injection molding or bonding design of the bus terminal board, the safety is improved; especially for the secondary sealing of the sealing position of the electrolytic capacitor, It can extend the working life of aluminum electrolytic capacitors; it can also set the temperature sensor to indirectly monitor the average working temperature rise of discrete aluminum electrolytic capacitors to predict the working life; and the internal integration of Y capacitors can optimize the EMC performance of the whole power supply equipment; and solve the problem of aluminum electrolytic capacitor modules Design and application issues such as heat dissipation installation inside the power supply equipment with protection level above IP65.

A centralized insulated aluminum electrolytic capacitor module, including a thermally conductive insulating sheet, a discrete aluminum electrolytic capacitor unit, a metal thermally conductive base member, an insulating shell, and an air cavity of an internal pressure release mechanism, the capacitor module is composed of discrete aluminum electrolytic capacitors The aluminum electrolytic capacitor module is tightly assembled with the metal heat-conducting base member, and the aluminum electrolytic capacitor module is installed with a heat-conducting insulating sheet for centralized external insulation and heat dissipation.

Among them, the discrete aluminum electrolytic capacitor and the metal heat-conducting base member are tightly assembled without insulation, and the aluminum electrolytic capacitor and the metal heat-conducting base member can form multiple assembly units, which can be connected in series or multi-stage by electrically connecting busbars. Series-parallel structure circuit.

Furthermore, the contact area between the surface of the aluminum shell of the aluminum electrolytic capacitor and the metal heat-conducting base member is increased as much as possible, which is beneficial to heat dissipation and reduces thermal resistance.

Specifically, the aluminum electrolytic capacitor and the metal heat-conducting component matrix can adopt a nest structure, and the entire circumferential surface of the aluminum electrolytic capacitor aluminum shell is placed in the circular hole of the metal heat-conducting component matrix to maximize the area.

Further, the assembly between the aluminum shell surface of the aluminum electrolytic capacitor and the base of the metal heat-conducting member is as close as possible, which is also beneficial to reduce thermal resistance and improve heat conduction efficiency.

Specifically, the surface of the aluminum shell of the aluminum electrolytic capacitor and the base of the metal heat-conducting member may be partially welded, or interference fit may be used to make the fit more tightly.

Further, in order to reduce the difficulty of the assembly process, the assembly hole of the base of the metal heat-conducting member and the aluminum case of the aluminum electrolytic capacitor can be designed to have the same taper, and the aluminum electrolytic capacitor is installed from the side of the large opening of the assembly hole of the base of the metal heat-conducting member and pressed tightly.

Further, the aluminum electrolytic capacitor and the metal heat-conducting component base are assembled in a nest structure, and sealing materials such as epoxy resin can be used to perform secondary sealing on the capacitor sealing and lead-out electrode positions inside the metal heat-conducting component base nest, so that the aluminum electrolytic capacitor The sealing of the seal is strengthened to prolong the working life of the capacitor.

Further, the metal heat-conducting base member can be provided with a temperature sensor, and the temperature sensor is insulated and surface-mounted or placed inside the metal heat-conducting base member.

Specifically, the metal heat-conducting base member and the discrete aluminum electrolytic capacitor unit are closely surface-mounted to absorb the heat loss of the capacitor to achieve thermal balance. The temperature sensor indirectly monitors the average operating temperature of all discrete aluminum electrolytic capacitor units through the metal heat-conducting base member.

Further, the electrical connection bus bar can be designed and manufactured by integral injection molding or bonding of the conductive copper bar and the injection molding body, and is covered by the injection molding body and internally isolated and insulated to become an overall independent bus terminal board.

Specifically, on the independent integral busbar terminal board, the welding position of the positive and negative leads or soldering pieces of the discrete aluminum electrolytic capacitor and the conductive copper bar, and the position of the external electrical connection terminal of the aluminum electrolytic capacitor module shall be avoided by injection molding.

Specifically, on the overall independent busbar terminal board of the multi-level series and parallel circuit structure, the welding positions of voltage equalizing resistors or other necessary components of the circuit can be injection molded to avoid air.

Specifically, the overall independent busbar terminal board can be adaptively changed in shape according to the structural shape of the aluminum electrolytic capacitor module and the installation position, angle, distance, etc. of the electrical connection terminals.

Wherein, the metal heat-conducting base member has a negative electrode, and one structural surface of the member base is used as the mounting surface of the aluminum electrolytic capacitor module for centralized insulation and heat dissipation through the heat-conducting insulating sheet.

Further, as the structural surface of the metal heat-conducting component substrate as the mounting surface of the aluminum electrolytic capacitor module is convenient for installation, the area should be maximized as much as possible, which is conducive to improving the efficiency of heat conduction and heat dissipation.

Furthermore, the insulating and heat-conducting sheet should try to use insulating and heat-conducting ceramics or silicone materials with higher thermal conductivity and thinner thickness, which is beneficial to the capacitor module to improve heat conduction efficiency.

Wherein, the insulating shell covers and insulates the assembly of the aluminum electrolytic capacitor and the metal heat-conducting member base for safety, and forms an air cavity and sets a pressure release outlet to form a pressure release mechanism inside the module.

Furthermore, the air cavity and the pressure release outlet are in the discrete aluminum electrolytic capacitor unit due to failure to open the pressure release mechanism, and the air cavity can avoid the short circuit of the aluminum electrolytic capacitor module caused by the leakage of the electrolyte with the negative electrode.

Specifically, the insulating shell corresponds to the insulation between multiple assembly units composed of aluminum electrolytic capacitors and metal heat-conducting component substrates, and a series or multi-stage series-parallel circuit is formed by electrically connecting busbars. Corresponding independent air cavities need to be set inside the insulating shell And the pressure release mechanism composed of the release outlet, to avoid the short circuit between the upper and lower series of aluminum electrolytic capacitor units caused by the leakage of electrolyte solution with negative voltage of the aluminum electrolytic capacitor single failure.

Wherein, the aluminum electrolytic capacitor module also includes an auxiliary radiator, and the radiator is isolated and installed on the mounting surface of the capacitor module through a heat-conducting insulating sheet.

Specifically, the heat sink can be any type of heat sink with any structural shape.

Specifically, the radiator can be assembled with the capacitor module by means of screw fastening or shrapnel compression.

Further, the heat sink may be a secondary heat sink coexisting with the main heat sink in the power supply device, providing heat dissipation for the power semiconductor device and the capacitor module respectively.

Further, the auxiliary radiator can be a component of the power supply housing, and the outer part of the housing is provided with cooling fins, and the inner side is isolated from the capacitor module through a thermally conductive insulating sheet.

Specifically, the metal casing of the power supply can be used as a secondary radiator.

Specifically, the auxiliary radiator, as a part of the power radiator, can be arranged side by side with the main radiator of the power supply, or can be arranged on any surface of the side of the power supply and the front casing.

Specifically, the aluminum electrolytic capacitor module and the sub-radiator assembly fastening screws or shrapnel are insulated from the metal heat-conducting base member of the capacitor module.

Wherein, the electrical connection terminal of the aluminum electrolytic capacitor module is electrically connected to the power main board or the conductive copper row.

Further, the electrical connection lead-out terminal can be adapted to the installation needs of the electrical connection terminal by changing its length, position, and shape according to the specific installation conditions.

Specifically, the electrical connection terminal can be electrically connected to the power main board or the conductive copper bar by means of soldering pin welding or copper sheet screw fastening.

Among them, the aluminum electrolytic capacitor module can be integrated with a Y capacitor, which is used to prevent the polarization of the aluminum foil at the negative electrode of the aluminum electrolytic capacitor, improve the service life and reliability of the aluminum electrolytic capacitor, and help improve the EMI electromagnetic interference of the power electronics system and improve EMC reliability.

Specifically, the positive and negative poles of the discrete aluminum electrolytic capacitor are electrically connected to the positive and negative conductive copper bars of the bus terminal board. The Y capacitor has two types of electrical connections: the positive conductive copper bar ground wire and the negative electrode conductive copper bar ground wire. Aluminum electrolytic capacitors form a circuit parallel structure on the positive and negative conductive copper bars.

Specifically, the Y capacitor can be arranged on the busbar terminal board or inside the metal heat-conducting base member, and the ground terminal can be arranged on the busbar terminal board or on the insulating shell.

The aluminum electrolytic capacitor module according to the above embodiment can use radiators including water-cooled radiators, which breaks the limitation that traditional aluminum electrolytic capacitors must be air-cooled for heat dissipation, and can design active heat dissipation power, so it can be used with current wind power converters or photovoltaic inverters The technical requirements for heat dissipation by means of liquid cooling for devices, etc.; for airtight protection applications above IP65, the temperature rise is reduced with the help of an attached radiator and combined with the secondary sealing of the capacitor monomer, which breaks through the upper limit of the 15-year design working life of the usual aluminum electrolytic capacitors, so it can be used Cooperating with long life, such as the application requirement of 25-year life of outdoor string photovoltaic inverter; the production of aluminum electrolytic capacitor module has greatly promoted the development of the application of aluminum electrolytic capacitor.

Compared with the aluminum electrolytic capacitor module that adopts the method of potting heat-conducting silica gel, this scheme cancels the discrete insulation design of discrete aluminum electrolytic capacitors with low thermal conductivity insulation and heat-conducting potting silica gel, and uses heat-conducting insulating sheets with higher thermal conductivity for centralized insulation and heat dissipation. The heat dissipation efficiency of the capacitor module is improved, and the electrical performance is optimized. In particular, the manufacturing process of the capacitor module is simplified and the manufacturing efficiency is improved; the overall design of the bus terminal board improves the safety and insulation reliability of the aluminum electrolytic capacitor module products. Reduces the number of structural parts, reduces material and process costs; simplifies the manufacturing process of aluminum electrolytic capacitor modules, shortens manufacturing hours, and improves economic benefits; avoids the appearance of defective products in the product manufacturing process, thus reducing the batch size of products Manufacturing cost; the aluminum electrolytic capacitor module can provide high temperature working protection monitoring and working life temperature prediction for the aluminum electrolytic capacitor module through the integrated temperature sensor; The loss heat is dissipated to the outside of the airtight casing; effectively reducing the temperature rise and heat accumulation inside the power supply casing; reducing the failure rate of the power supply; prolonging the working life of the capacitor module; and ensuring that the power supply has a high level of protection against dust and moisture; through The aluminum electrolytic capacitor module integrates Y capacitors, which effectively solves the problem that the high-order harmonics existing on the power DC bus lead to reverse pulse current formation of the negative electrode foil by the electrolyte inside the aluminum electrolytic capacitor, and avoids premature aging and failure of the aluminum electrolytic capacitor; at the same time, the Y The capacitor can effectively suppress the common mode interference of the power electronic device, and improve the EMC reliability of the whole power electronic device system.

### Brief Description of the Drawings

The above and other features of the present invention will be given below with reference to the accompanying drawings.
FIG. 1 Schematic diagram of the nest structure assembly of aluminum electrolytic capacitor monomer and metal heat-conducting base member.
FIG. 2 is a schematic diagram of the assembly structure of the aluminum electrolytic capacitor module.
FIG. 3 Combination structure diagram of the air cavity of the internal pressure release mechanism.
FIG. 4 Schematic diagram of the secondary sealing of the aluminum electrolytic capacitor.
FIG. 5 is a schematic diagram of the combined structure of the busbar terminal board.
FIG. 6 Overall drawing of the overall injection molded busbar terminal board.
FIG. 7: Outline drawing of NTC temperature sensor module combination.
FIG. 8 installs the schematic diagram of NTC temperature sensor module.
FIG. 9 is a schematic diagram of the centralized insulation and heat dissipation installation of the aluminum electrolytic capacitor module.
FIG. 10 is a schematic diagram of the capacitor module being assembled with an external heat sink inside the power supply unit.
FIG. 11 Capacitor module configuration Y capacitor circuit structure diagram.
FIG. 12 Outline drawing of Y capacitor combination module.
FIG. 13 is a schematic diagram of installing a Y capacitor combination module inside the capacitor module.

The numbers in the accompanying drawings represent the following:
1-Aluminum electrolytic capacitor monomer
11-Aluminum electrolytic capacitor single electrical connection lead terminal
2-Metal heat-conducting matrix components
21-Aluminum electrolytic capacitor single installation nest hole
22-Insulation and heat dissipation installation surface of capacitor module
23-Accessory radiator mounting screw holes
24-Housing assembly guide hole
25-NTC temperature sensor bayonet
26-Y capacitor combination module bayonet
27-Sealing material flat layer
28-Sealing material space
3-Combined busbar terminal board
31-injection shell bottom plate
311-NTC temperature sensor card holder
312-Y capacitor combination module card holder
313-Single capacitor positive and negative leads through hole
32-positive bus bar
321-Capacitor module positive terminal
322-Single capacitor positive lead welding hole
323-Through hole for the negative lead wire of the single capacitor
33-Positive and negative bus bar insulation board
331-Through hole for the positive and negative leads of the single capacitor
34-Negative bus bar
341-Capacitor module negative terminal
342-Single capacitor negative lead wire welding hole
343-Single capacitor positive lead through hole
35-injection shell cover
36-Capacitor Module Label Sticker
37-Integral busbar terminal board
371-Insulation injection molded body
372-Capacitor positive and negative lead welding avoidance space
4-Insulation shell
41-Pressure release port
42-Housing Mounting Guide Post
43-Pressure release cavity sealing rib
44-Pressure relief chamber strut
45-Capacitor module positive and negative terminals mounting base
46-NTC temperature sensor wiring slot
47-Y capacitor combination module connection terminal notch
48-Mounting screw through hole
49-Insulation sleeve for screw hole flange surface
5-NTC temperature sensor packaging module
51-NTC temperature sensor chip package probe
52-connector terminal
6-Y capacitor combination module
61-Y capacitor circuit connection packaging module
611-Y capacitor monomer
62-Earth terminal base
63-Y capacitor bank positive lead
64-Y capacitor bank negative lead
65-ground wire
7-Insulation and heat conduction mounting gasket
71-Mounting screw through hole
8-Auxiliary (sub) radiator
81-radiator fins
82-Capacitor module screw mounting holes
83-Insulation Mounting Flange Gasket
9-Main Radiator
91-Main radiator with external fins
92-IGBT module
93-Power Protection Shell
94-Accessory Radiator Mounting Hole

### Detailed Description of the Preferred Embodiment

The present invention will be described in further detail below through specific embodiments in conjunction with the accompanying drawings.

In the following embodiments, many detailed descriptions are for better understanding of the present invention, however, those skilled in the art can easily realize that some of the features can be made by other materials and methods under different circumstances Substitute or omit.

In some cases, some related operations are not shown or described in the description, in order to avoid the core part of the application of the present invention from being overwhelmed by too many descriptions. For those skilled in the art, they can General technical knowledge is sufficient to fully understand the operation involved.

The following are preferred embodiments:

Discrete aluminum electrolytic capacitor cells 1 without insulating sleeves are respectively placed in the nest holes 21 of the metal heat-conducting base member 2. In order to maximize the heat dissipation efficiency, the interference assembly method is adopted to make the circumferential surface of the nest hole 21 and the aluminum electrolytic capacitor 1 The surface of the aluminum shell is tightly fitted.

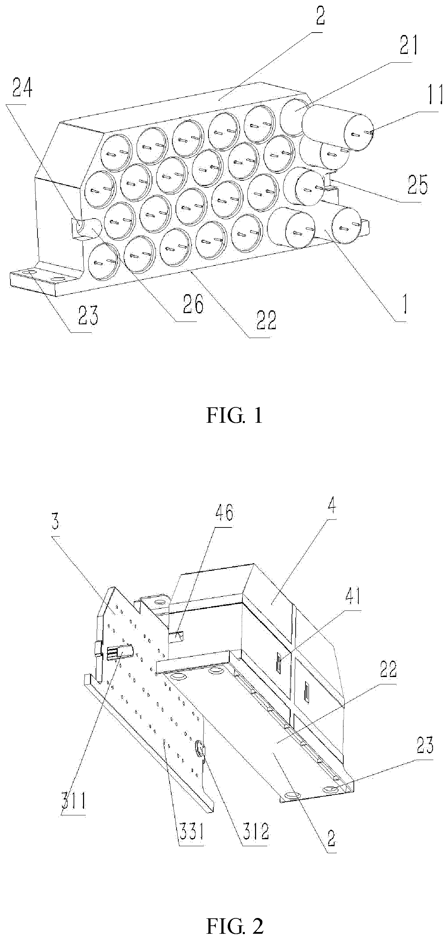

As shown in FIG. 1, The lower side of the metal heat-conducting base member 2 is used as the mounting surface 22 of the aluminum electrolytic capacitor module, and the mounting screw holes 23 for the auxiliary radiator 8 are distributed on the installing surface 22 of the aluminum electrolytic capacitor module. The guide hole 24 is on the side of the air chamber of the rear pressure release mechanism. The guide hole 24 is used to cooperate with the installation guide post 42 of the insulating shell 4. On the front side, that is, the side of the bus terminal board 3, it is respectively set as an NTC temperature sensor, Bayonet 25 and Y capacitor combination module bayonet 26.

As shown in FIG.2, The insulating shell 4 covers and insulates the assembly of the discrete aluminum electrolytic capacitor 1 and the metal heat-conducting base member 2 as a whole from the rear, and insulates the rear end of the metal heat-conducting base member 2 and the top pressure release port side of the discrete aluminum electrolytic capacitor 1 A pressure release air cavity for air circulation is provided between the shell 4 and the end face of the metal heat-conducting base member 2, and a pressure release air outlet 41 is correspondingly provided on the insulating shell 4. The insulating shell 4 is installed with guide posts 42 and metal The installation guide holes 24 provided on both sides of the heat-conducting base member 2 are assembled in a mortise-and-mortise manner.

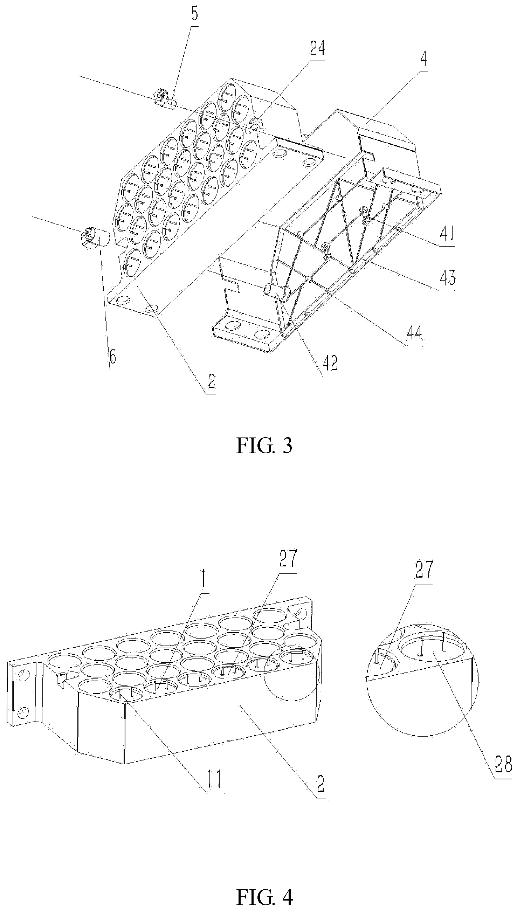

As shown in FIG. 3, The pressure release air cavity formed by the insulating shell 4 and the metal heat-conducting base member 2 adopts a butt seal design, that is, the insulating shell 4 is provided with a sealing rib 43 and a pressure-releasing cavity pillar 44 corresponding to the end face of the metal heat-conducting base member 2, and is sealed with the end face. Materials such as sealant are used to seal the cavity, which can avoid short circuit to the outside caused by leakage of electrolyte with negative electrode when the aluminum electrolytic capacitor single 1 fails.

As shown in FIG. 2, FIG. 3, The positive and negative lead terminals 11 of the discrete aluminum electrolytic capacitor unit 1 pass through the positive and negative lead through holes 313 on the bottom plate 31 of the injection molded case and are electrically connected to the positive bus bar 32 and the negative bus bar 34 by welding; Install the NTC temperature sensor bayonet 25 and the Y capacitor combination module bayonet 26 on the base member 2 on the position of the guide hole 24, respectively have the NTC temperature sensor socket 311 and the Y capacitor combination module socket 312, and connect the NTC temperature sensor 5 and the Y capacitor assembly module socket 312 respectively. Capacitor combination modules 6 are placed therein respectively, and become an integral aluminum electrolytic capacitor module after assembly.

As shown in FIG. 4, In order to ensure better insulation performance between the positive and negative lead terminals 11 of the discrete aluminum electrolytic capacitor unit 1 and the metal heat-conducting base member 2, and to better seal the rubber sealing position of the aluminum electrolytic capacitor unit 1, in the discrete The upper side of the sealing rubber on the side of the positive and negative lead terminals 11 of the aluminum electrolytic capacitor unit 1 and the space inside the nest hole 21 of the aluminum electrolytic capacitor unit on the metal heat-conducting base member 2 are injected with epoxy resin material to form a sealed flat layer structure , to ensure that aluminum electrolytic capacitors have better insulation reliability and a longer sealing guarantee period.

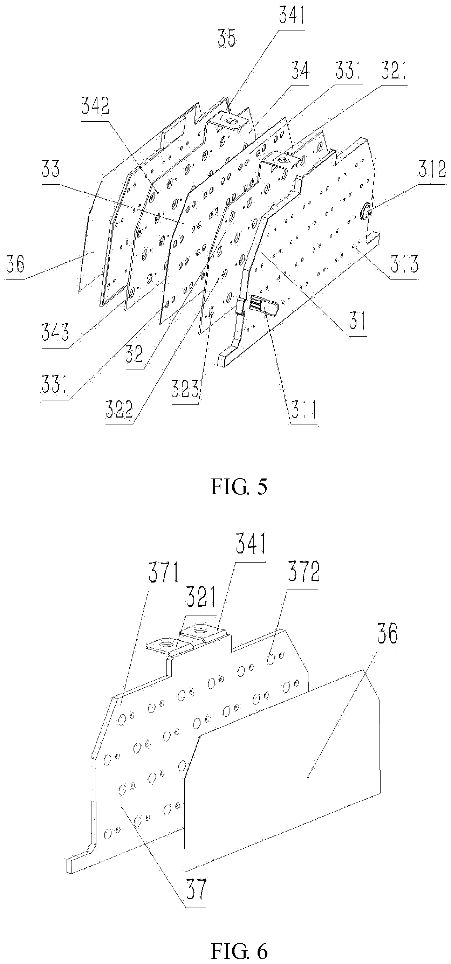

As shown in FIG. 5, For the combined busbar terminal board 3 as described above, first, the negative busbar 34 is put into the bottom plate 31 of the injection molded case, secondly, the insulating paper 33 is put into the bottom plate 31 of the injection molded case, and then the positive busbar 32 is put into the bottom plate 31 of the injection molded case, respectively. The positive and negative leads 11 corresponding to the discrete aluminum electrolytic capacitor 1 are electrically connected by welding to ensure mutual insulation and form a complete laminated busbar structure. Finally, the outer injection molded upper cover plate 35 is placed in the injection molded shell bottom plate 31 to ensure It is externally insulated, and the product label paper 36 marking the performance parameters such as the specifications and models of the capacitor module is on the outermost side, which is bonded to the outer side of the injection molded upper cover plate 35 to form a combined aluminum electrolytic capacitor module bus bar terminal board.

As shown in FIG. 6, The positive bus bar 32 and the negative bus bar 34 of the overall injection molded bus terminal board 37 are placed in the plastic mold at the limit position, and the injection molding equipment completes the injection molding of the shell bottom plate 31, the positive and negative bus bar insulating plates 33 and the injection molding upper cover plate at one time. 35 overall production, in order to make the lead wires 11 of the discrete aluminum electrolytic capacitor 1 and the corresponding positive bus bar 32 and negative bus bar 34 electrically connected by welding, the welding position of the injection molded body should be avoided, and the injection molded body of the bus terminal plate 37 Ensure reliable insulation between the internal positive busbar 32 and negative busbar 34, while the positive lead-out terminal 321 and the negative lead-out terminal 341 of the aluminum electrolytic capacitor module are also electrically connected to the outside; The capacitor module label sticker 36 with better insulation performance is used for pasting and covering.

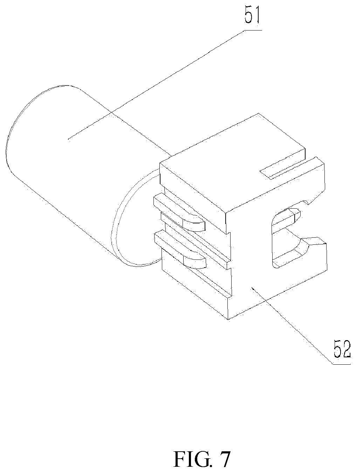

As shown in FIG. 7, The NTC temperature sensor packaging module 5 is divided into two parts: a temperature sensor packaging probe 51 and a terminal connector 52. The probe can be packaged and insulated with materials such as epoxy, metal, glass, and film.

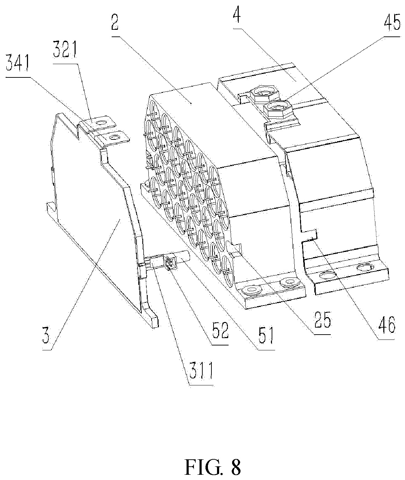

As shown in FIG. 8, The NTC temperature sensor packaging module 5 is inserted into the NTC temperature sensor packaging module holder 311 of the bus terminal board 3, and the bus terminal board 3 is assembled while the NTC temperature sensor packaging module 5 connector 52 is partly snapped into the NTC temperature of the metal heat-conducting base member 2. In the sensor bayonet 25, put the temperature sensor package probe 51 into the shell assembly guide hole 24 of the metal heat-conducting base member 2. In order to make the assembly firm, the outside of the temperature sensor probe 51 in the guide hole 24 can be held by glue or shrapnel etc. to fix.

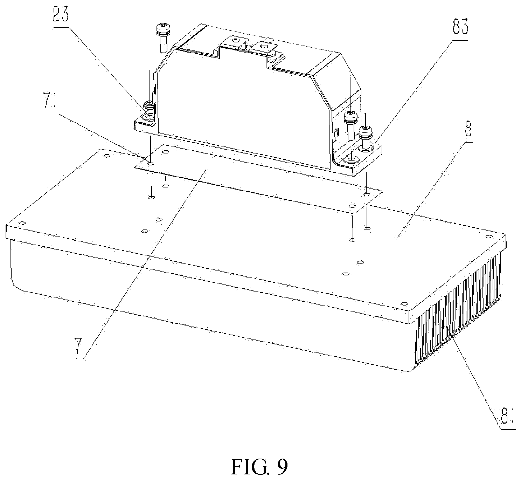

As shown in FIG. 9, One of the structural surfaces of the metal heat-conducting base member 2 is used as the insulating mounting surface 22 of the capacitor module, and screw mounting holes 23 are distributed on it for fixing and assembling with the auxiliary radiator 8; the heat-conducting insulating gasket 7 is arranged on the mounting surface 22 and the mounting surface of the capacitor module. Insulation and heat conduction are provided between the auxiliary radiators 8; the insulation mounting flange gasket 83 ensures insulation between the mounting screws and the metal heat conduction base member 2 .

As shown in FIG. 9,The heat-conducting insulating sheet 7 and the aluminum electrolytic capacitor module are stacked on the auxiliary radiator 8, and the mounting screws pass through the insulating mounting flange gasket 83, the aluminum electrolytic capacitor module mounting screw hole 23, and the heat-conducting insulating sheet screw hole 71, and the attached radiator 8 Tighten and fix the assembly to insulate the aluminum electrolytic capacitor module metal heat conduction base member 2 from the attached radiator 8, and use the heat conduction insulating sheet 7 to achieve higher heat conduction and heat dissipation effects of the aluminum electrolytic capacitor module.

As shown in FIG. 9,The upper part of the capacitor module is electrically connected to the positive terminal 321 and the negative terminal 341, and the position and shape of the terminals can be changed according to specific conditions to meet the installation needs of electrical connection.

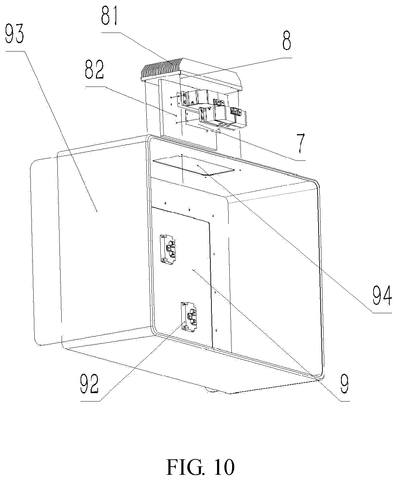

As shown in FIG. 10, The back (rear) part of the power supply protection case 93 is provided with a main radiator 9, and its outer side is provided with a main radiator fin 91, and its inner side is used for installing the IGBT module 92, on the upper side of the main radiator and on the protective case 93. An auxiliary heat sink installation hole 94 is provided for assembling the auxiliary heat sink 8 , the heat dissipation fins 81 are arranged on the outside of the heat sink, and the capacitor module is mounted on a plane inside thereof.

As shown in FIG. 10, The main heat sink 9 and the auxiliary heat sink 8 are installed in isolation from each other to prevent the high temperature generated by the IGBT module on the main heat sink 9 from dissipating heat through the auxiliary (secondary) heat sink 8, which will affect the capacitor module due to high temperature.

As shown in FIG. 10, As a part of the power supply protection casing 93, the auxiliary radiator 8 protects the inside of the power supply. Its outer cooling fins 81 are placed in the low-temperature environment outside the power supply casing 93, and its inner side is in an internal high-temperature environment.

As shown in FIG. 10, The auxiliary radiator 8 is located on the side of the main radiator 9 as a whole, which is beneficial for the auxiliary radiator fins 81 to be away from the high temperature influence of the main radiator fins 91 .

As shown in FIG. 10, The sub-radiator 8 is located on the inner plane of the power supply housing 93 and has a capacitor module mounting screw hole 82 for mounting and fixing the screw through the through hole of the heat conducting insulating sheet and the capacitor module mounting and fixing hole 23 .

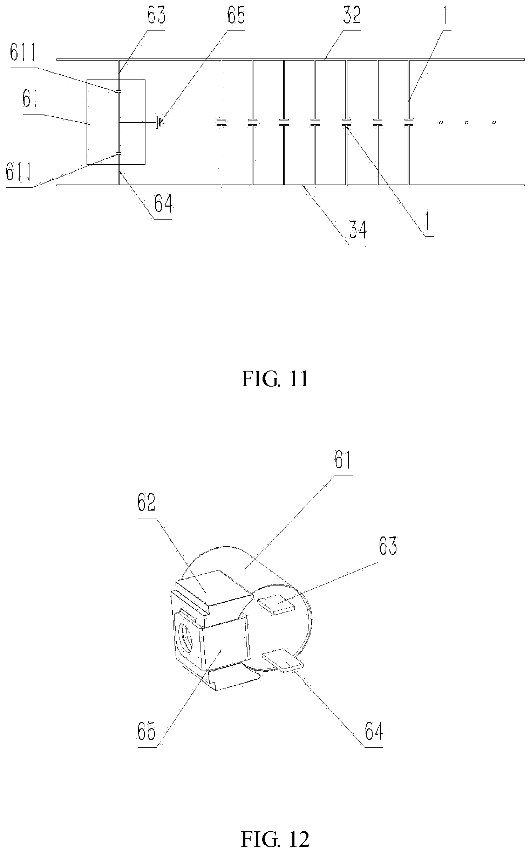

The circuit structure is shown in FIG. 11, The aluminum electrolytic capacitor module with integrated Y capacitors is composed of multiple aluminum electrolytic capacitors 1 and two series Y capacitors 611 connected in parallel, and the two series Y capacitors 611 are connected across the positive conductive copper bar 32 and the negative conductive copper bar 34 Between the two Y capacitors 611 in series, the ground wire 65 is drawn out.

As shown in FIG. 12, The ground wire 65, the positive lead wire 63, the negative lead wire 64 and the Y capacitor 611 form a complete circuit structure, which is integrated into a Y capacitor circuit and connected to the package module 61, together with the ground wire terminal base 62 to form a Y capacitor combined module.

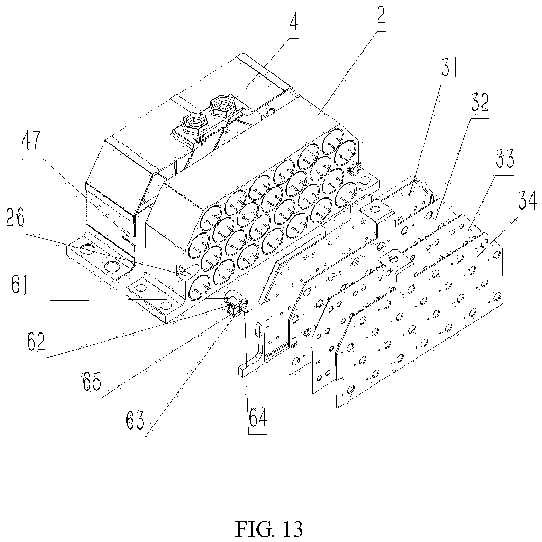

As shown in FIG. 13, The Y capacitor combination module is installed, and the corresponding positive electrode lead wire 63 is welded and electrically connected with the positive electrode conductive copper row 32, and the negative electrode lead wire 64 passes through the positive electrode conductive copper row 32 through hole and the negative electrode conductive copper row 34.

As shown in FIG. 13, During the assembly process of the capacitor module, the ground wire terminal base 62 snaps into the Y-capacitor combination module bayonet 26 of the metal heat-conducting base member 2, and the Y-capacitor circuit connection packaging module 61 is inserted into the housing assembly guide hole 24 of the metal heat-conducting base member 2.

When the aluminum electrolytic capacitor module is assembled, the positive terminal 321 and the negative terminal 341 are respectively electrically connected to the positive and negative power busbars of the whole machine, and the ground wire terminal 65 is used to electrically connect to the ground wire of the whole machine.

## Claims

1. An aluminum electrolytic capacitor integration module, comprising separate aluminum electrolytic capacitors, a heat-conducting base component, a heat-conducting insulation gasket, a housing, an affiliated bus terminal board and an affiliated radiator, wherein the aluminum electrolytic capacitor integration module is formed by closely assembling the separate aluminum electrolytic capacitors and the heat-conducting base component, and realizes centralized insulation and heat dissipation to the outside by means of the heat-conducting insulation gasket, and the aluminum electrolytic capacitor integration module is integrated with a temperature sensor and a Y capacitor.

2. The aluminum electrolytic capacitor integration module according to Claim 1, wherein the heat-conducting base component is of any shape, size and structure, and forms a compact assembly structure together with the separate aluminum electrolytic capacitors.

3. The aluminum electrolytic capacitor integration module according to Claim 1 or 2, wherein the separate aluminum electrolytic capacitors and the heat-conducting base component form multiple assembly units, and form the aluminum electrolytic capacitor integration module of a series circuit structure or a multi-stage series-parallel circuit structure by designing an electrical connection busbar.

4. The aluminum electrolytic capacitor integration module according to Claim 1 or 2, wherein the separate aluminum electrolytic capacitors and the heat-conducting base component are closely assembled by means of cell or semi-cell structures, and circumferential surfaces of aluminum shells of the aluminum electrolytic capacitors are entirely or partially disposed in circular holes or semicircular holes of the heat-conducting base component.

5. The aluminum electrolytic capacitor integration module according to Claim 1 or 4, wherein the separate aluminum electrolytic capacitors and the heat-conducting base component are closely assembled in a manner that the circular holes (cells) of the heat-conducting base component are in taper fit with the aluminum shells of the aluminum electrolytic capacitors, such that the assembly difficult is lowered.

6. The aluminum electrolytic capacitor integration module according to Claim 1, wherein the separate aluminum electrolytic capacitors are aluminum electrolytic capacitor products adopting lead-type, crescent-shaped or screw-type lead-out structures.

7. The aluminum electrolytic capacitor integration module according to Claim 1, wherein secondary sealing is performed on seal positions of positive and negative poles of the separate aluminum electrolytic capacitors with a sealing material such as epoxy resin.

8. The aluminum electrolytic capacitor integration module according to Claim 1 or 7, wherein the secondary sealing of the seal positions of the separate aluminum electrolytic capacitors is performed by means of cells of the heat-conducting base component after assembly; or, the secondary sealing is performed on the separate aluminum electrolytic capacitors separately before assembly.

9. The aluminum electrolytic capacitor integration module according to Claim 1, wherein an assembly formed by the separate aluminum electrolytic capacitors and the heat-conducting base component is covered and insulated by the housing, and the assembly is entirely or partially covered with one or more materials such as plastic or three-proofing (insulating) paint.

10. The aluminum electrolytic capacitor integration module according to Claim 1 or 9, wherein an auxiliary structure is disposed on an inner or outer surface of the housing to clamp or fix the housing or the capacitor integration module.

11. The aluminum electrolytic capacitor integration module according to Claim 1 or 9, wherein an air cavity and a pressure outlet of an internal pressure release mechanism are defined by the housing and the heat-conducting base component, the internal pressure release mechanism is started in case of a fault of the separate aluminum electrolytic capacitors, and the air cavity protects the aluminum electrolytic capacitor integration module against short circuits caused by leaking of an electrolytes with negative charges.

12. The aluminum electrolytic capacitor integration module according to Claim 1 or 11, wherein in a case where the separate aluminum electrolytic capacitors and the heat-conducting base component form multiple assembly units, corresponding independent air cavities and pressure outlets are arranged to prevent short circuits between aluminum electrolytic capacitor units caused by upward or downward leaking of the electrolyte with the negative charges.

13. The aluminum electrolytic capacitor integration module according to Claim 1, wherein auxiliary structures such as holes or slots are disposed on the heat-conducting base component to clamp or fix the housing, a bus terminal board, and other structural components.

14. The aluminum electrolytic capacitor integration module according to Claim 1, wherein the heat-conducting insulation gasket is made of heat-conducting insulation ceramic, silica gel, or other heat-conducting insulation materials.

15. The aluminum electrolytic capacitor integration module according to Claim 1 or 14, wherein the heat-conducting base component is entirely or partially made of heat-conducting ceramic or silica gel.

16. The aluminum electrolytic capacitor integration module according to Claim 1 or 14, wherein the heat-conducting insulation gasket is flake-like to reduce the thickness and heat resistance, and is in a groove shape or other shapes beneficial to the structural design of the integration module.

17. The aluminum electrolytic capacitor integration module according to Claim 1, 14 or 16, wherein heat-conducting insulation gasket is assembled on the capacitor module when installed, or is integrated with the heat-conducting base component or the affiliated radiator.

18. The aluminum electrolytic capacitor integration module according to Claim 1, wherein the temperature sensor is disposed a surface of the heat-conducting base component in an insulative manner or is disposed in the heat-conducting base component to indirectly monitor an average operating temperature rise of all the separate aluminum electrolytic capacitors.

19. The aluminum electrolytic capacitor integration module according to Claim 1 or 18, wherein a heat-conducting component allowing the temperature sensor to be disposed on a surface thereof in an insulative manner or disposed therein is separately disposed in the aluminum electrolytic capacitor integration module.

20. The aluminum electrolytic capacitor integration module according to Claim 1 or 18, wherein the temperature sensor is an NTC or PTC thermistor, a thermocouple of a K type, a J type or other specifications, or other temperature sensing devices.

21. The aluminum electrolytic capacitor integration module according to Claim 1 or 18, wherein the temperature sensor is a temperature sensing device, which is made of a film, epoxy, glass, metal or any other materials, and is packaged in any form.

22. The aluminum electrolytic capacitor integration module according to Claim 1 or 18, wherein aluminum electrolytic capacitor integration module is provided with multiple temperature sensing devices, which are distributed at different positions of the heat-conducting base component, and an average value of all the temperature sensing devices is used as a result to realize accurate monitoring.

23. The aluminum electrolytic capacitor integration module according to Claim 1, wherein the integrated bus terminal board of the aluminum electrolytic capacitor integration module comprises electrical connection copper bars and an injection-molded member, the copper bars are electrically conductive copper bars for realizing parallel connection, series connection, or multi-stage series-parallel connection of the separate aluminum electrolytic capacitors, the electrical connection copper bars and injection-molding materials for insulating and isolating the electrical connection copper bars are covered by the injection-molded member, and the electrically conductive copper bars and the injection-molded member form an independent integrated structural component by injection molding or bonding.

24. The aluminum electrolytic capacitor integration module according to Claim 23, wherein the injection-molded member is provided with holes corresponding to some positions of the integrated bus terminal board, and the electrically conductive copper bars are exposed to allow positive and negative leads or soldering terminals of the separate aluminum electrolytic capacitors to be welded thereto.

25. The aluminum electrolytic capacitor integration module according to Claim 23, wherein welding positioning injection-molding holes for voltage-sharing resistors or other necessary circuit elements are formed in the bus terminal board of a multi-stage series-parallel circuit structure.

26. The aluminum electrolytic capacitor integration module according to Claim 23, wherein an electrical connection terminal led out of the integrated bus terminal board has a length and shape capable of being adaptively adjusted according to an outline structure of the aluminum electrolytic capacitor integration module and an installation position, angle and distance of the electrical connection terminal, to be electrically connected to a power mainboard or the electrically conductive copper bar adaptively.

27. The aluminum electrolytic capacitor integration module according to Claim 23, wherein one or more groups (strings) of positive and negative bus circuits are disposed in the integrated bus terminal board.

28. The aluminum electrolytic capacitor integration module according to Claim 23, wherein an auxiliary structure is disposed on an inner or outer surface of the integrated bus terminal board to clamp or fix the bus terminal board or the capacitor integration module.

29. The aluminum electrolytic capacitor integration module according to Claim 1, wherein positive and negative poles of all the separate aluminum electrolytic capacitors of the aluminum electrolytic capacitor integration module are directly connected to a power main circuit PCB to be electrically connected to an IGBT/MOSFET module and a power bus, that is, a suitable PCB is used as the bus terminal board.

30. The aluminum electrolytic capacitor integration module according to Claim 1, wherein the affiliated radiator is mounted on the capacitor integration module through the heat-conducting insulation gasket.

31. The aluminum electrolytic capacitor integration module according to Claim 1 or 28, wherein the affiliated radiator is an air-cooled finned radiator, a liquid-cooled radiator, or a heat transfer and conduction object such as a power device housing.

32. The aluminum electrolytic capacitor integration module according to Claim 1 or 28, wherein the affiliated radiator is fastened on the capacitor integration module with screws or is pressed on the capacitor integration module with clips.

33. The aluminum electrolytic capacitor integration module according to Claim 28, 19 or 30, wherein fins of the affiliated radiator are disposed outside a power device housing, the capacitor integration module is mounted in the airtight power device housing, and the affiliated radiator is used as an auxiliary radiator of a power device of a high protection level and airtightness level.

34. The aluminum electrolytic capacitor integration module according to Claim 28, wherein the affiliated radiator is a dedicated radiator of the capacitor integration module, a radiator shared by the capacitor integration module and other devices, or an auxiliary radiator shared by multiple capacitor integration modules.

35. The aluminum electrolytic capacitor integration module according to Claim 31, wherein the auxiliary radiator and a main radiator are disposed on a same plane of the power device housing or on different planes of the power device housing.

36. The aluminum electrolytic capacitor integration module according to Claim 29, 31 or 32, wherein the affiliated radiator in the power device housing may be in different special shapes to facilitate the layout of the capacitor module in the power device housing.

37. The aluminum electrolytic capacitor integration module according to Claim 1, wherein a positive pole of the Y capacitor is electrically connected to a ground wire or a negative pole of the Y capacitor is electrically connected to the ground wire, and the positive and negative poles of the Y capacitor (connected in series) and positive and negative poles of the aluminum electrolytic capacitors form a parallel circuit structure.

38. The aluminum electrolytic capacitor integration module according to Claim 1, wherein the Y capacitor is a ceramic capacitor, a thin-film capacitor, or other capacitors.

39. The aluminum electrolytic capacitor integration module according to Claim 1, wherein one Y capacitor is used, or multiple Y capacitors (groups) connected in parallel are used; and the Y capacitor is disposed inside or outside the capacitor module.

40. The aluminum electrolytic capacitor integration module according to Claim 1, wherein the Y capacitor (group) is electrically connected to a power main board or a bus copper bar by welding, or by tightening with screws synchronously with the capacitor module.

41. The aluminum electrolytic capacitor integration module according to Claim 1, wherein positive poles and negative poles of the Y capacitor are electrically connected to a ground wire, or the positive or negative pole of the Y capacitor is electrically connected to the ground wire.

42. The aluminum electrolytic capacitor integration module according to Claim 1, wherein a ground wire of the Y capacitor is a metal wire or a metal conducting bar in any shape, and is directly led out to be connected to a complete ground wire or is connected to the complete ground wire through an adapter terminal.
